# FASCICULE DE BREVET EUROPEEN

(11) **EP 1 983 872 B1**
(45) Date de publication et mention de la délivrance du brevet: **22.07.2009**
(21) Numéro de dépôt: 07730875.7
(22) Date de dépôt: 26.01.2007
(51) Int. Cl.: A47J 36/02

(54) **SURFACE DE CUISSON FACILE A NETTOYER ET ARTICLE ELECTROMENAGER COMPORTANT UNE TELLE SURFACE**
LEICHT ZU REINIGENDE KOCHPLATTE UND ELEKTRISCHER HAUSHALTSARTIKEL MIT EINER SOLCHEN PLATTE
EASY-CLEAN COOKING SURFACE AND DOMESTIC ELECTRICAL ARTICLE COMPRISING SUCH A SURFACE

(30) Priorité: 13.02.2006 FR 0601249
(43) Date de publication de la demande: 29.10.2008
(73) Titulaire: SEB SA, 69130 Ecully (FR)
(72) Inventeur: COUDURIER, Alain, F-73410 Albens (FR); TUFFE, Stéphane, F-73160 Cognin (FR)
(74) Mandataire: Kiehl, Hubert
(86) Numéro de dépôt international: PCT/FR2007/000157
(87) Numéro de publication internationale: WO 2007/093682

(56) Documents cités:
- FR-A1- 2 848 797
- GB-A- 1 153 823

## Description

La présente invention concerne le domaine des articles destinés à la préparation et à la cuisson des aliments et plus particulièrement la surface de cuisson de ces articles en contact avec les aliments à traiter.

Depuis de nombreuses années, des efforts importants ont été développés afin de faciliter la préparation quotidienne des repas. Parmi les progrès notables, les revêtements à base de polymères fluorocarbonés en tant que revêtement anti-adhésif dans les ustensiles de cuisine se sont rapidement développés depuis la fin des années 1950. De tels revêtements sont mondialement connus depuis que le procédé présenté dans le brevet FR 1120749 a permis une fixation sûre de tels revêtements sur des métaux divers, tel l'aluminium.

Toutefois, de tels revêtements restent fragiles et résistent mal à la rayure. Ainsi, des astuces ont été développées afin de renforcer mécaniquement la couche sur son support. De nombreux brevets de perfectionnement décrivent des méthodes et moyens permettant d'accroître la résistance aux rayures de tels revêtements, en agissant sur le revêtement et/ou sur le substrat. Malgré tout, de tels revêtements restent sensibles à l'usage répété de matériaux métalliques aiguisés ou pointus, tels des couteaux ou fourchettes.

Parallèlement, des développements ont été menés sur des surfaces résistantes mécaniquement dont on a essayé d'améliorer la facilité de nettoyage. Des dépôts métalliques, tels le chromage sur inox, les quasi-cristaux, ou non métalliques (silicates,...) sont ainsi apparus. Les résultats restent toutefois décevants, notamment en comparaison avec les revêtements de type PTFE.

On connaît également, par le document FR 2 848 797, une surface de cuisson composée en majorité de zirconium métallique, surface qui possède une très bonne dureté, dès lors que la couche est nitrurée ou carburée, présentant des facilités de nettoyage satisfaisantes mais sans atteindre la facilité de nettoyage des couches de type PTFE.

La présente invention vise à remédier aux inconvénients précités de l'art antérieur, en proposant une surface de cuisson aux caractéristiques améliorées de facilité de nettoyage, présentant durablement une réduction de l'adhérence des aliments lors de la cuisson, ainsi qu'après cuisson, lors du nettoyage, de résistance à la corrosion, tout en présentant une bonne tenue mécanique, et notamment une dureté élevée.

La présente invention est atteinte par une surface de cuisson d'aliments pour ustensile de cuisine ou appareil de cuisson, caractérisée en ce que cette surface de cuisson est un dépôt contenant au moins 30 % de niobium.

Les teneurs indiquées sont des teneurs en poids.

Le niobium est notamment connu pour son potentiel élevé de durcissement, son point de fusion élevé, ainsi que sa bonne résistance aux agents chimiques. Il est essentiellement utilisé dans l'élaboration des aciers, en particulier sous forme de carbure, ainsi que dans le domaine médical, le niobium étant considéré comme élément biocompatible.

D'une manière surprenante, il a été constaté, au cours d'essais, que des dépôts contenant une teneur significative de niobium, voire même une surface en niobium pur, présentaient également des propriétés de facilité de nettoyage lorsque de telles surfaces étaient utilisées en tant que surface de cuisson et que des denrées alimentaires restaient accrochées à la surface, par exemple après une calcination des produits mis à cuire. Cette facilité de nettoyage peut être exprimée par la possibilité d'enlever facilement des éléments carbonisés sur la surface de cuisson.

Avantageusement, le dépôt contient du zirconium ou du titane, dans une teneur inférieure à 70 %.

L'utilisation de zirconium ou de titane permet d'obtenir des teintes de revêtement très variées qu'il n'est pas possible d'obtenir uniquement avec le niobium. Il est alors possible de définir une couleur de revêtement permettant d'identifier clairement, pour l'utilisateur, que le revêtement utilisé est spécifique et correspond à un revêtement "facile à nettoyer".

On peut même envisager différentes teintes pour différentes utilisations (oeufs, poissons, viande,...), afin que les utilisateurs identifient facilement la bonne surface de cuisson pour faire cuire un type d'aliment donné.

Par ailleurs, l'utilisation du zirconium ou du titane permet de conserver les caractéristiques de facilité de nettoyage et de dureté, et ceci même pour des proportions élevées de ces éléments.

L'élaboration de la surface de cuisson consiste en un dépôt physique en phase vapeur des constituants sur un substrat, à partir d'une ou plusieurs cible(s) massive(s). D'une manière générale, toutes les techniques de dépôt physique en phase vapeur peuvent être utilisées. Les épaisseurs des dépôts sont comprises entre 2 et 10 µm.

Cette mise en oeuvre présente l'avantage d'utiliser peu de matière et de pouvoir ajuster une faible épaisseur de matériau sur le substrat en vue de réaliser la surface de cuisson. Cette technique de dépôt permet, par ailleurs, d'obtenir des dépôts en forte cohésion avec le substrat sur lequel ils sont déposés. Les risques de décollement du dépôt au cours de l'utilisation sont ainsi minimisés.

Avantageusement, l'élaboration comporte une étape de carburation et/ou de nitruration d'au moins l'un des constituants. Une telle étape peut être réalisée avant le dépôt, les constituants étant préalablement carburés ou nitrurés, ou pendant le dépôt, par introduction, dans l'enceinte de dépôt, de gaz réactifs.

De telles étapes permettent d'augmenter considérablement la dureté de la surface de cuisson, tout en apportant de la diversité dans les teintes obtenues, essentiellement en jouant sur la stoechiométrie du nitrure, du carbure ou du carbonitrure de zirconium ou de titane, les carbonitrures étant connus pour leur dureté élevée.

Dans un mode spécifique d'élaboration, une première étape de nitruration sera réalisée avant une étape ultérieure de carburation ou de carbonitruration en surface, ladite étape de nitruration permettant une bonne adhérence de la couche de carbure ou de carbonitrure. Il est en effet connu par ailleurs, qu'il est très difficile de faire adhérer une couche de carbure ou de carbonitrure de certains composés utilisés sur un substrat de type aluminium ou inox sans couche intermédiaire. Par ailleurs, la vitesse de dépôt d'une couche de carbure est nettement supérieure à la vitesse de dépôt d'une couche de nitrure.

De tels composés allient les propriétés de facilité de nettoyage au potentiel élevé de durcissement, de coloration et de résistance à la corrosion des couches de nitrure, carbure et carbonitrure de zirconium, titane et niobium. Les duretés obtenues peuvent aller jusqu'à 2400 Vickers pour un carbure ou nitrure de zirconium.

Avantageusement, une couche de dépôt métallique des différents constituants est réalisée avant la phase de carburation et/ou de nitruration. Une telle séquence permet d'améliorer la résistance à la corrosion et procure une meilleure adhérence de la couche qu'un dépôt direct de carbure, nitrure ou carbonitrure des composants.

De plus, le dépôt d'une couche métallique est plus rapide que le dépôt de cette même couche avec un gaz réactif, ce qui permet une plus grande vitesse de dépôt au global.

Selon un mode préféré d'élaboration, le dépôt est réalisé à partir d'une cible obtenue par assemblage sur un substrat conducteur d'une ou plusieurs tôle(s) ou plaque(s) de matériau ayant la composition recherchée. On parlera alors de cible monobloc ou mosaïque

Les tôles ou plaques sont préférentiellement obtenues par laminage. D'autres techniques peuvent toutefois être utilisées dans le cadre de l'invention : frittage de poudre, projection thermique de poudre, ou bien encore issues de coulée.

Ces cibles constituent donc la source des matériaux qui seront déposés sur la surface de cuisson.

Le substrat peut être composé d'une ou plusieurs tôle(s) métallique(s) des matériaux suivants : aluminium, inox, fonte, acier, cuivre.

D'autres avantages issus des essais apparaîtront à la lecture de la description qui va suivre, en relation avec plusieurs exemples d'illustration de la présente invention donnés à titre d'exemple non limitatif.

Les différents exemples de réalisation de l'invention concernent un dépôt, sur un substrat inox, par PVD, d'un composé comportant de manière significative du niobium. Tous les substrats utilisés sont préparés de façon analogue, en subissant un émerisage et/ou un polissage mécanique, éventuellement suivi d'une préparation mécanique de type grenaillage ou microbillage, puis d'un nettoyage ionique.

Les différents dépôts présentés sont les suivants :
- C1 : carbure de niobium
- C2 : nitrure de niobium
- C3 : zirconium (50 %) et niobium (50 %). Après le dépôt des constituants, la couche a subi une nitruration.

Le système d'évaluation de la facilité de nettoyage permet de quantifier les capacités d'une surface de cuisson à retrouver son aspect d'origine après usage. Ce système d'évaluation comprend les étapes suivantes :
- la surface est localement recouverte d'un mélange alimentaire de composition connue,
- ce mélange est carbonisé dans un four dans des conditions définies, par exemple 210 °C pendant 20 minutes,
- après refroidissement, la surface est mise à tremper pendant un temps contrôlé dans un mélange d'eau et de détergent,
- un tampon abrasif est ensuite appliqué sous une contrainte définie à l'aide d'un appareil à abraser (plynomètre) sur la surface souillée dans un mouvement de va-et-vient pendant un nombre donné de cycles,
- le pourcentage de la surface correctement nettoyée est noté et
caractérise la facilité de nettoyage de la surface de cuisson.

Les essais menés sur différents types de surface permettent ainsi d'évaluer comparativement la qualité des surfaces quant à leur facilité de nettoyage.

Bien entendu, les essais sont réalisés en respectant les mêmes paramètres pour chaque étape du système d'évaluation : même mélange alimentaire, même surface d'application du mélange alimentaire, même température de carbonisation,...

Le tableau comparatif suivant montre les résultats obtenus sur trois surfaces de cuisson différentes, à savoir un inox poli, un quasi-cristaux, et l'alliage cobalt / zirconium selon l'un des eutectiques cités, déposé sur inox, nitruré puis carbonitruré, tel que précédemment décrit, après polissage, dans un test sévère avec une composition alimentaire à base de lait et de riz réputée comme difficile à nettoyer une fois carbonisée. Un tel test permet ainsi de bien mettre en évidence les différences entre la qualité de nettoyage des surfaces.

| | Inox poli | Quasi-cristaux | C1 | C2 | C3 |
|---|---|---|---|---|---|
| Quantité de résidu carbonisé enlevée | 50 % | 60 % | 100 % | 100 % | 95 % |

Le tableau fait ressortir les excellentes propriétés des couches C1, C2 et C3 déposé sur inox, et notamment les résultats comparés à d'autres surfaces de cuisson. D'autres tests conduits sur une base aluminium montrent des résultats analogues.

Il est à noter que le nombre de cycles d'abrasion sur le plynomètre a été fixé à 18. Ce nombre réduit de cycles met bien en évidence la qualité de facilité de nettoyage de la surface selon l'invention puisqu'il ne reste plus que 5 % de la surface souillée après 18 mouvements de va-et-vient du tampon abrasif.

Des essais répétitifs après nettoyage complet de la surface montrent que la facilité de nettoyage de l'alliage présenté n'est pas altérée.

La présente invention n'est pas limitée aux exemples de réalisation mentionnés. On peut en effet modifier dans une large mesure la quantité de zirconium présente dans la surface de cuisson, certes en diminuant légèrement la dureté, mais en permettant d'accentuer et de proposer des teintes de revêtement plus diversifiées.

De même, en faisant varier le taux de nitruration, il est possible d'obtenir des teintes différentes de l'aspect métallique présenté par l'inox. Des tons jaune, ocre, ambré, anthracite, gris fumé, violet, bleu,... peuvent ainsi être obtenus.

Cette phase de coloration par nitruration peut aussi être réalisée après la phase de dépôt PVD. Par exemple, la pièce, avec son dépôt peut être post traitée dans un four, sous atmosphère d'azote, avec éventuellement ajout d'oxygène.

L'élément d'addition au niobium peut aussi être du titane de façon à lui donner une coloration différente de celle de l'inox.

## Revendications

1. Surface de cuisson d'aliments pour ustensile de cuisine ou appareil de cuisson, **caractérisée en ce que** cette surface de cuisson est un dépôt contenant au moins 30 % de niobium.

2. Surface de cuisson d'aliments pour ustensile de cuisine ou appareil de cuisson selon la revendication précédente, **caractérisée en ce que** le dépôt contient du zirconium ou du titane, dans une teneur inférieure à 70 %.

3. Surface de cuisson d'aliments pour ustensile de cuisine ou appareil de cuisson selon l'une des revendications précédentes, dont l'élaboration consiste en un dépôt physique en phase vapeur des constituants sur un substrat, à partir d'une ou plusieurs cible(s) massive(s).

4. Surface de cuisson d'aliments pour ustensile de cuisine ou appareil de cuisson selon la revendication précédente, dont l'élaboration est **caractérisée par** une étape de carburation et/ou de nitruration d'au moins l'un des constituants, avant ou pendant leur dépôt.

5. Surface de cuisson d'aliments pour ustensile de cuisine ou appareil de cuisson selon l'une des revendications précédentes, **caractérisé en ce qu'**une couche de dépôt métallique des différents constituants est réalisée avant une phase de carburation et/ou de nitruration.

6. Surface de cuisson d'aliments pour ustensile de cuisine ou appareil de cuisson selon l'une des revendications précédentes, **caractérisé en ce que** l'épaisseur du dépôt réalisé est comprise entre 2 et 10 µm.

7. Surface de cuisson d'aliments pour ustensile de cuisine ou appareil de cuisson selon la revendication précédente, **caractérisée en ce que** le dépôt est réalisé à partir d'une cible obtenue par assemblage sur un substrat conducteur d'une ou plusieurs tôle(s) ou plaque(s) de matériau ayant la composition recherchée, lesdites tôles ou plaques étant obtenues soit par laminage, soit par frittage de poudre ou projection thermique de poudre, soit issues de coulée.

8. Surface de cuisson d'aliments pour ustensile de cuisine ou appareil de cuisson selon la revendication 3, **caractérisée en ce que** le substrat est composé d'une ou plusieurs tôle(s) métallique(s) des matériaux suivants : aluminium, inox, fonte, acier, cuivre.

## Claims

1. A food cooking surface for a kitchen utensil or cooker, **characterized in that** the cooking surface is a deposit containing at least 30% niobium.

2. A food cooking surface for a kitchen utensil or cooker according to the preceding claim, **characterized in that** the deposit contains zirconium or titanium, with a content of less than 70%.

3. A food cooking surface for a kitchen utensil or cooker according to any preceding claim, wherein preparation thereof consists in physical vapour deposition of the ingredients onto a substrate, from one or more solid target(s).

4. A food cooking surface for a kitchen utensil or cooker according to the preceding claim, wherein preparation thereof is **characterized by** a step of carburizing and/or nitriding at least one of the ingredients, before or during deposition.

5. A food cooking surface for a kitchen utensil or cooker according to any preceding claim, **characterized in that** a metal plated layer the various ingredients is produced before a carburizing and/or a nitriding stage.

6. A food cooking surface for kitchen utensil or cooker according to any preceding claim, **characterized in that** the thickness of the deposit produced lies in the range of 2 µm to 10 µm.

7. A food cooking surface for kitchen utensil or cooker according to the preceding claim, **characterized in that** the deposit is produced from a target obtained by assembling of one or more sheet(s) or plate(s) of material having the desired composition on a conductive substrate, said sheets or plates being obtained by rolling, or by powder sintering or powder thermal spraying, or by casting.

8. A food cooking surface for kitchen utensil or cooker according to claim 3, **characterized in that** the substrate is made up of one or more metal sheet(s) of the following materials: aluminum, stainless steel, cast iron, steel, and copper.

## Patentansprüche

1. Fläche zum Kochen von Lebensmitteln für ein Küchenutensil oder Kochgerät, **dadurch gekennzeichnet, dass** diese Kochfläche eine Beschichtung mit mindestens 30 % Niobium ist.

2. Fläche zum Kochen von Lebensmitteln für ein Küchenutensil oder Kochgerät nach dem vorhergehenden Anspruch, **dadurch gekennzeichnet, dass** die Beschichtung Zirkonium oder Titan in einem Gehalt von weniger als 70 % enthält.

3. Fläche zum Kochen von Lebensmitteln für ein Küchenutensil oder Kochgerät nach den vorhergehenden Ansprüchen, deren Ausführung aus einer physikalischen Dampfphasenabscheidung der Bestandteile auf einem Substrat ausgehend von einem oder mehreren massiven Targets besteht.

4. Fläche zum Kochen von Lebensmitteln für ein Küchenutensil oder Kochgerät nach dem vorhergehenden Anspruch, deren Ausführung durch einen Schritt der Aufkohlung und/oder Nitrierung mindestens eines der Bestandteile vor oder während ihrer Abscheidung **gekennzeichnet** ist.

5. Fläche zum Kochen von Lebensmitteln für ein Küchenutensil oder Kochgerät nach einem der vorhergehenden Ansprüche, **dadurch gekennzeichnet, dass** eine Schicht einer Metallabscheidung der verschiedenen Bestandteile vor einer Phase der Aufkohlung und/oder Nitrierung ausgebildet wird.

6. Fläche zum Kochen von Lebensmitteln für ein Küchenutensil oder Kochgerät nach einem der vorhergehenden Ansprüche, **dadurch gekennzeichnet, dass** die Dicke der ausgebildeten Beschichtung zwischen 2 und 10 µm beträgt.

7. Fläche zum Kochen von Lebensmitteln für ein Küchenutensil oder Kochgerät nach einem der vorhergehenden Ansprüche, **dadurch gekennzeichnet, dass** die Beschichtung ausgehend von einem Target gebildet wird, das durch Zusammenfügen eines oder mehrerer Bleche oder Platten aus einem Material mit der gesuchten Zusammensetzung auf einem leitenden Substrat erhalten wird, wobei die Bleche oder Platten entweder durch Sintern von Pulver oder thermisches Spritzen von Pulver oder als Gusserzeugnis erhalten werden.

8. Fläche zum Kochen von Lebensmitteln für ein Küchenutensil oder Kochgerät nach Anspruch 3, **dadurch gekennzeichnet, dass** das Substrat aus einem oder mehreren Metallblechen aus folgenden Materialien besteht: Aluminium, nichtrostender Stahl, Gusseisen, Stahl, Kupfer.
